# EUROPEAN PATENT APPLICATION

(11) **EP 3 812 145 A1**
(43) Date of publication of application: **28.04.2021**
(21) Application number: 19205196.9
(22) Date of filing: 24.10.2019
(51) Int. Cl.: B32B 5/02, B32B 7/09, B32B 27/08, B32B 27/18, B32B 27/32, B32B 27/36

(54) **COMPOSITE PANELS AND PARTS**

(71) Applicant: Arrival Limited, London W14 8TS (GB)
(72) Inventor: THOMPSON, Rob, London, W14 8TS (GB)
(74) Representative: Korenberg, Alexander Tal

(57) **Abstract**

The disclosed composite structure provides a reinforced thermoplastic polymer composite part with a high-quality surface finish. This may be used as a vehicle part or body panel, such as an interior vehicle part or exterior body panel. Additionally, the surface finish may be coloured, such that the surface does not need to be painted or wrapped to achieve a desired surface colour, and the surface may protect inner layers from UV radiation, either by virtue of the material of the surface itself, or the incorporation of a UV-absorbing additive. Specifically, the disclosed composite structure comprises a structural layer comprising reinforcing fibres, such as glass or carbon fibres, and a thermoplastic body polymer. The structure further comprises a surface layer providing a surface finish to the composite structure, the surface layer comprising a thermoplastic surface polymer substantially free from reinforcing fibres. By providing a surface layer without the reinforcing fibres, the reinforcing fibres are shielded from the surface and print-through is consequently reduced, resulting in an improved surface finish.

## Description

The present disclosure relates to a composite part, for example a vehicle part or body panel formed from a composite structure, a corresponding composite structure and a method for manufacturing a part comprising a composite structure.

Composite panels and parts formed from thermoplastic polymers comprising reinforcing fibres are desirable for their light weight, high strength and versatility. However, certain thermoplastic polymers have a dull surface finish, while the reinforcing fibres within the panels and parts exhibit 'print-through' as a result of the thermoplastic matrix shrinking as it cools during manufacture. This currently prohibits the use of such composites on the surface of panels and parts that must be aesthetically pleasing, i.e. have a smooth and shiny surface finish, or requires additional finishing treatments to achieve the desired finish.

Aspects are set out in the independent claims and optional features are set out in the claims dependent thereto.

The disclosed composite structure provides a reinforced thermoplastic polymer composite part with a high-quality surface finish. This may be used as a vehicle part or body panel, such as an interior vehicle part or exterior body panel. Additionally, the surface finish may be coloured and/or grained (textured), such that the surface does not need to be painted or wrapped to achieve a desired surface colour, and the surface may protect inner layers from UV radiation, either by virtue of the material of the surface itself, or the incorporation of a UV-absorbing additive. It will be understood, however, that while the improved surface finish can enable the use of composite parts that need not be painted, in some embodiments paint or other surface finishes may nevertheless be applied to the surface.

In some aspects, a composite structure comprises a structural layer comprising reinforcing fibres, such as glass or carbon fibres, and a thermoplastic body polymer. The structure further comprises a surface layer providing a surface finish to the composite structure, the surface layer comprising a thermoplastic surface polymer substantially free from reinforcing fibres. By providing a surface layer without the reinforcing fibres, the reinforcing fibres are shielded from the surface and print-through is consequently reduced, resulting in an improved surface finish.

The term "composite structure" as used in this disclosure encompasses both a precursor structure (wherein the layers are not fused) for making a composite part, and a fused structure, the latter being a composite part. The reinforcing fibres and thermoplastic body polymer may form a plurality of alternating first fibre layers and thermoplastic body polymer layers.

The reinforcing fibres may form a mesh, wherein the thermoplastic body polymer encompasses the mesh of reinforcing fibres. A mesh may be woven or non-woven fabric, or layers of such a fabric; the structural layer may be formed of two or more sub-layers, for example sublayers formed from a mesh of reinforcing fibres. The structural layer may be formed from one or more layers of a mesh or fabric of a yarn of the reinforcing fibres combined with fibres of the thermoplastic body polymer. The mesh or fabric may be woven or non-woven.

In some embodiments, the structure may further comprise a veil layer comprising veil fibres between the structural layer and the surface layer, wherein the veil layer is configured to reduce print-through of the reinforcing fibres into the surface layer, optionally the veil layer may be incorporated into the structural layer. The veil fibres may form a mesh or fabric. The veil fibres may be glass fibres, carbon fibres or any other fibres not adversely affected by heat during processing of the composite, and the fibres may be formed into a yarn. Veil fibres may be provided in the form of a glass or polyester tissue, for example. In any of these embodiments including veil fibres, the diameter of the veil fibres may be between 5 and 15 µm and/or wherein the diameter of the reinforcing fibres may be between 15 and 20 µm. The diameter of the veil fibres may be less than 75%, less than 50%, less than 25% or less than 10% of the diameter of the reinforcing fibres.

In some embodiments, the surface layer, when consolidated, is substantially free of fibres. That is there are no reinforcing or other fibres in the surface layer, although the unconsolidated surface layer may comprise polymer fibres. In some embodiments, the surface layer may be formed from one or more layers of a fabric of thermoplastic polymer yarn, for example a woven or knitted fabric. A woven or knitted fabric is advantageous in that it provides good drape, facilitating the arrangement of the unconsolidated structure in a mould. In one particular example, the surface layer may be woven or knitted from a PET yarn. The surface layer may comprise a coloured layer sandwiched between the structural layer and a clear protective layer.

When consolidated, the surface layer may have a thickness greater than 0.1mm, 0.2mm, 0.3mm, 0.4mm. 0.5mm or 0.6mm. To achieve this thickness, the unconsolidated structure will have an even greater thickness, for example 2-3 mm, due to the empty spaces between the loops of yarn in the woven or knitted fabric. However, as the skilled person will be aware, a given consolidated thickness can be predicted for a given fabric based on the fabrics specific weight, its thickness and the density of the consolidated polymer and so an appropriate number of fabric can be chosen for the unconsolidated structure to achieve a desired consolidated thickness.

In all disclosed aspects and embodiments, the surface layer may comprise one or more of a pigment, a dye, a flame retardant and a UV-absorbing additive and may optionally be painted with a suitable paint to further enhance or alter the finish. The thermoplastic body polymer and/or thermoplastic surface polymer may be a polypropylene-based thermoplastic polymer or a polyester-based thermoplastic polymer and thermoplastic body polymer and the thermoplastic surface polymer may be the same or a different polymer.

In some embodiments, the layers may be fused together to form a composite part, for example a vehicle part or body panel.

A method of manufacturing a part comprising a composite structure comprises arranging a composite structure, for example as described above, in a mould; raising the temperature of the composite structure above a reaction threshold temperature to fuse the composite structure; cooling the composite structure to below the reaction threshold temperature to form the part; and removing the part from the mould. The method may further comprise applying a pressure differential, for example positive pressure applied from outside the mould, across the composite structure while the temperature of the composite structure is above the reaction threshold temperature.

The reaction threshold temperature may be a temperature threshold at which a physical reaction of the thermoplastic body polymer occurs. Examples of a physical reaction include sintering, melting or partial melting the thermoplastic body polymer. A physical reaction may also comprise consolidating the thermoplastic body polymer and reinforcing fibres, for example heating them such that the thermoplastic body polymer becomes fluid enough to flow around the structural fibres. The reaction threshold temperature may be but is not limited to the melting point of the thermoplastic body polymer or the glass transition temperature of the thermoplastic body polymer. During manufacture of the composite structure, the layers may be assembled and cut before being placed in the mould. Alternatively, the layers can be placed in the mould individually to arrange the composite structure in the mould.

In some embodiments, arranging the composite structure in the mould may comprise arranging one or more structural layers and one or more surface layers in the mould, wherein each structural layer comprises a woven fabric woven from a yarn of commingled or otherwise combined reinforcing fibres and thermoplastic polymer fibres and each surface layer comprises a woven or knitted fabric woven or knitted from a thermoplastic polymer yarn. A corresponding composite structure comprises, pre-consolidation, one or more such structural layers and one or more such surface layers.

Embodiments will now be described by way of example with reference to the drawings of which:
Figure 1 illustrates a two-layer composite structure;
Figure 2 illustrates an unconsolidated composite structure having a woven structural layer and a woven or knitted surface layer; and
Figure 3 illustrates a three-layer composite structure.

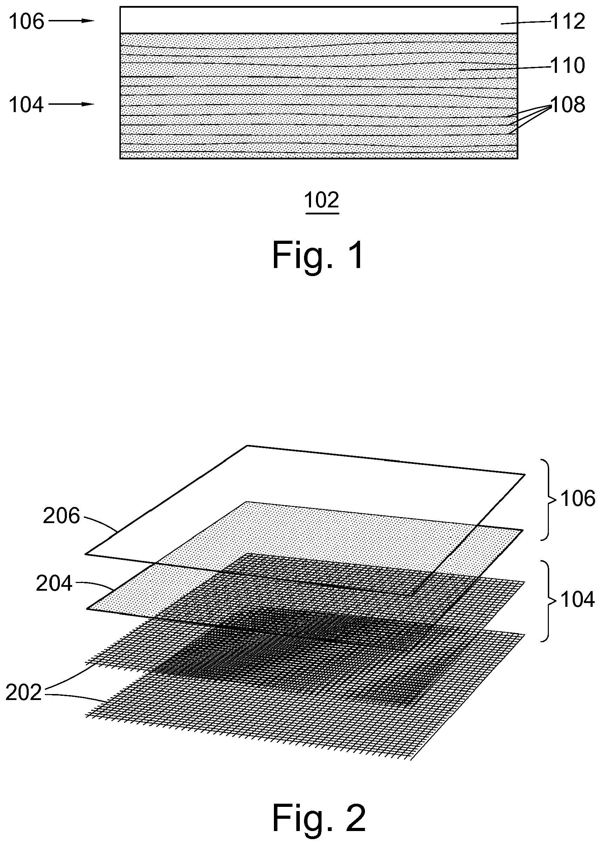

With reference to Figure 1, in first embodiments, a composite structure 102 comprises a structural layer 104 and a surface layer 106. The term "composite structure" as used herein may refer to both a precursor composite structure, wherein the individual layers are not fused together, and a fused structure, wherein the individual layers have been fused together to form a part, for example as a result of the fusing process described below.

The structural layer 104 comprises reinforcing fibres 108 and a thermoplastic body polymer 110. The structural layer 104 provides the composite structure 102 with the majority of its structural strength once fused by providing a matrix of the body polymer 110 embedded with reinforcing fibres 108. The surface layer 106 provides the composite structure 102 with a surface finish, and comprises a thermoplastic surface polymer 112 that does not comprise (or is at least substantially free from) reinforcing fibres.

Since, in the first embodiments, the surface layer 104 does not comprise any fibres or other reinforcing component, there is nothing within the surface layer 106 itself to cause print-through after fusing of the layers. Moreover, the surface layer 106 acts as a buffer that blocks and obscures print-through from the structural layer 104 beneath.

The reinforcing fibres 108 may be made from many different materials known to the person skilled in the art, such as glass fibre and carbon fibre. The reinforcing fibres 108 may be formed into a yarn, which may be formed into a fabric, mesh or weave. Alternatively, the reinforcing fibres 108 may comprise loose fibres, may be formed into a non-woven, for example a felt, or may take any another other suitable form.

The body polymer 110 may be any thermoplastic polymer, however preferred thermoplastic polymers include polypropylene and polyester such as polyethylene terephthalate (PET), with polypropylene being particularly preferred.

The structural layer may be made from fibres or filaments of the thermoplastic body polymer 110. These fibres can be commingled or otherwise combined with the reinforcing fibres 108 to form a combined yarn, which can be woven into a fabric or mesh.

In a particularly advantageous embodiment, the structural layer 104 may be made from a woven fabric, specifically a combined glass and thermoplastic weave, which comprises glass fibres commingled or otherwise combined with polypropylene filaments that form a combined yarn, with the combined yarn woven into a fabric. More generally, the structural layer 104 may be made from a weave of commingled or otherwise combined fibres of the body polymer 110 and reinforcing fibres 108.

The terms "yarn" and thread are used in a broad sense to cover any yarn or thread of a suitable form factor to be woven, knitted or otherwise constructed into a fabric. In the same sense, the term "fibre" is understood to cover a wide range filaments and cross-sectional form factors of the fibre and is understood to cover tape, and in particular spread tow tape, in relation to either or both of reinforcing and thermoplastic polymer fibres. The yarn may be a combined yarn formed by combining, for example commingling or parallel weaving, different fibres, for example fibres of thermoplastic polymer and reinforcing fibres.

The structural layer 104 may be formed itself from several sublayers, for example several layers of a weave or fabric as described above; other pre-cursor fabrics or weaves; or alternating layers of the thermoplastic body polymer 110 and reinforcing fibres 108, for example alternating layers of a sheet of the thermoplastic body polymer 110 and of a layer of a fabric or weave of reinforcing fibre 108. It will be appreciated that many combinations of such sub layers and alternative arrangements of sublayers forming the structural layer 104 are possible, without departing from the present disclosure. In some embodiments, the reinforcing fibres 108 have a diameter in the range of 15-20µm.

The surface layer 106 comprises a thermoplastic surface polymer 112, which may be any thermoplastic polymer, including the same material as the thermoplastic body polymer 110 of the structural layer 104, that is the thermoplastic body polymer 110 and thermoplastic surface polymer 112 may be the same. In some embodiments, the surface and body polymers are not the same. A variety of thermoplastic polymers may be used for the surface layer 106, for example polypropylene or polyester, such as polyethylene terephthalate. In some embodiments, the surface layer may have a thickness in a range of 100 to 300µm, or even more.

In some specific embodiments now described with reference to Figure 2, the composite structure 102, in its unconsolidated form, has a structural layer 104 comprising one or more woven fabric layers 202 as described above and a surface layer 106 comprising one or more layers 204,206 of a woven or knitted polymer fabric, woven or knitted from a yarn of polymer fibres, for example PET fibres. The woven or knitted fabric and the number of layers of woven or knitted fabric may be selected based on their thickness, specific weight and polymer density to give a desired consolidated thickness. In one specific example three layers of a PET fibre woven or knitted fabric are used to provide a surface layer thickness of about 0.6mm in the consolidated structure. A thick surface layer 106 is advantageous in that it better hides the underlying surface structure of the structural layer 104 and therefore achieves a better surface finish as compared to a thin layer that only partially hides the underlying structure. In one specific example, the surface layer 106 comprises a coloured layer 204 between a clear protective layer 206 and the one or more fabric layers of the structural layer 104. The protective layer 206 protects the coloured layer 204 from physical damage to reduce the risk of visible scratches when the part is used. In some embodiment the surface layer 106 comprises coloured and protective layers 204, 206 constructed differently, for example from non-woven fabrics of blown films rather than woven or knitted fabrics.

In some embodiments, the surface layer 106 may comprise one or more of a pigment, a dye, a flame retardant and a UV-absorbing additive in order to bestow desirable properties on the surface layer 106 such as a particular surface colour or UV-resistance. Accordingly, it may not be necessary to paint, coat or wrap the surface layer 106 in order to provide a desirable surface finish.

To manufacture a part comprising the composite structure 102, the layers of the composite structure 104, 106 are first assembled. For example, a surface layer of polyester or PET, fabric or otherwise as described above, may be placed on a fabric of commingled or otherwise combined polypropylene fibres and glass fibres. The layers may then be cut to a desired shape suitable for forming the fused three-dimensional composite structure. Alternatively, the part may first be moulded from the composite structure, with excess trimmed off afterwards.

The temperature of the assembled layers 104, 106 is then raised above a reaction threshold temperature to soften the layers 104, 106. The thermoplastic body polymer and/or thermoplastic surface polymer 110/112 is/are consolidated, melted (at least partially) or sintered at the reaction threshold temperature, such that the polymer fibres and layers fuse together.

The reaction threshold temperature may be equal to or above the highest of the glass transition/melting temperature of the thermoplastic body polymer 110 and the glass transition/melting temperature of the thermoplastic surface polymer 112, although it may also be lower, so long as the thermoplastic polymers are softened, for example such that the thermoplastic body polymer 110 bonds together. The reaction threshold temperature is typically between 180-220 °C, depending of course on the nature of the thermoplastic polymers present. For example, this temperature range is suitable for polypropylene.

The softened or molten layers are then pressed or urged into contact with a mould, for example by applying a pressure differential across the layers, and subsequently cooled to below the reaction threshold temperature, at which point the structural layer 104 and surface layer 106 become fixed in the shape of the mould. The layers may be arranged such that it is the side of the surface layer 106 that is nearest the mould. This process is referred to as fusing of the composite structure 102. It will be appreciated that in some embodiments the steps of softening or melting the layers and moulding of the softened or molten layers may proceed in parallel, that is the initially cool layers may be urged into contact with the mould and heated at the same or at a subsequent time while continuing to urge the composite structure 102 into contact with the mould. The pressure differential may be applied by negative pressure, evacuating air from between the mould and the layers, or by positive pressure to the layers from outside the mould, or both.

A texture tool can be placed in or incorporated into the mould. When softened or melted, the surface material conforms to the surface of the tool - whether gloss, matte or textured - thus reproducing its finish on the surface of the final part. Thus, parts or panels made from the composite structure 102 may be more aesthetically appealing and/or ergonomic, for example, the surface may hide wear-and-tear and/or have improved grip or reduced squeak.

The method may further comprise applying a pressure differential across the composite structure 102, for example as described above, prior to raising the temperature of the composite structure 102 above the reaction threshold temperature. This prevents or reduces the risk of air from being trapped within the layers, which can further improve the surface finish.

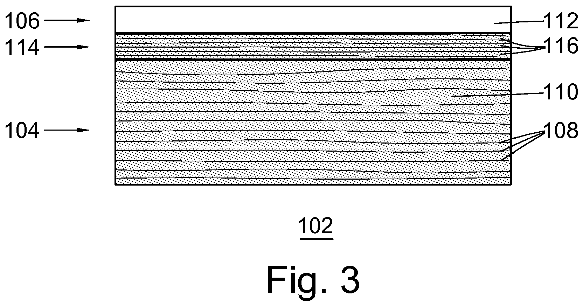

With reference to Figure 3, in second embodiments that reduce print-through of a structural layer 104, a composite structure 102 comprises a structural layer 104, a surface layer 106 and a veil layer 114 between the structural layer 104 and surface layer 106. Figure 2 illustrates the composite structure 102 of the second embodiment.

In the second embodiments, the structural layer 104 and surface layer 106 are the same as in the first embodiments, however, a veil layer 114 is located between the structural layer 104 and surface layer 106. The veil layer 114 comprises veil fibres 116, such as glass fibres, carbon fibres or any other fibres not adversely affected by heat during processing of the composite, which may be formed into a yarn, which may in turn be formed into a mesh or weave. Alternatively, the veil fibres 116 may comprise loose fibres, may be formed into a felt, or may take another other suitable form.

Importantly, the diameter of the veil fibres 116 is less than the diameter of the reinforcing fibres 108. For example, the diameter of the reinforcing fibres 108 may be between 15-20µm, and the diameter of the veil fibres 116 may be 5-15µm. The veil layer is typically very thin, for example, having a single or a few layers of veil fibres 116. Here and in other parts of the disclosure, the "diameter" is the diameter of the fibres themselves, or the diameter of the thread or yarn formed from the individual fibres, whichever is larger.

When the structural layer 104, the surface layer 106 and the veil layer 114 of the second embodiment are fused into a composite structure 102, the veil layer 114 acts as a buffer that blocks print-through from the structural layer 104. Since the diameter of the veil fibres 116 is less than the diameter of the reinforcing fibres 108, the surface layer may smoothly cover the surface variations due to the thinner veil fibres to eliminate print-through. Even if the veil reinforcing fibres 116 do print-through into the surface layer 106, the print-through is much less pronounced, resulting in a further improved surface finish. The "diameter" of the reinforcing fibres and veil fibres may refer to the average or median diameter of the reinforcing fibres or veil fibres.

The veil layer 114 may be provided separately to the structural layer 104 or be integrated with it. That is, the veil layer may be incorporated into the structural layer 104, for example it may be adhered to the structural layer 104, stitched or woven into a side of the structural layer 104, or laminated, stitch-bonded, needle-punched with the structural layer 104, and so on. For example, glass veil fibres 116 may be incorporated into a structural layer 104 comprising a weave of polypropylene fibres 110 and glass reinforcing fibres 108.

The embodiments described above can, of course, comprise further layers, such as further thermoplastic polymer comprising layers, fibre layers, veil layers, or layers of any other material, and should not be understood as being limited to comprising only the layers described above.

As explained above, possible uses for the composite structures 102 include use as vehicle parts or body panels. As would be understood by the person skilled in the art, when the composite structure 102 is fused, the structure can be shaped as required by use of an appropriate mould, for example as described in European patent application EP19205144.9 entitled "MANUFACTURE OF COMPOSITE PART, incorporated by reference.

It will be appreciated that the above description is made by way of example and not limitation of the scope of the appended claims, including any equivalents as included within the scope of the claims. Various modifications are possible and will be readily apparent to the skilled person in the art. Likewise, features of the described embodiments can be combined with any appropriate aspect described above and optional features of any one aspect can be combined with any other appropriate aspect. While the described composite structure, method of manufacture and vehicle parts and body panels are particularly advantageous in the context of electric vehicles as explained above, it will be understood that described embodiments are not limited to this application but rather are applicable to any vehicles, be that other road vehicles, for example being driven by internal combustion engines, naval vehicles such as boats, ships and other vessels and airborne vehicles such as planes, helicopters and the like. The disclosure is further equally applicable to stationary structures, such as buildings, requiring low-cost, lightweight and high-strength panels and parts.

## Claims

1. A composite structure comprising:
a structural layer comprising reinforcing fibres and a thermoplastic body polymer; and
a surface layer providing a surface finish to the composite structure, the surface layer comprising a thermoplastic surface polymer substantially free from reinforcing fibres.

2. The composite structure of claim 1 or 2, wherein the structural layer is formed from one or more layers of a mesh of a yarn of the reinforcing fibres combined with fibres of the thermoplastic body polymer.

3. The composite structure of any preceding claim, wherein the surface layer, when consolidated, is substantially free of fibres.

4. The composite structure of claim 3, wherein the surface layer, when consolidated, has a thickness greater than 0.1mm, 0.2mm, 0.3mm, 0.4mm. 0.5mm or 0.6mm.

5. The composite structure of any preceding claim, wherein the surface layer is formed from one or more layers of a fabric of thermoplastic polymer yarn.

6. The composite structure of claim 5, wherein the fabric is a woven or knitted fabric.

7. The composite structure of claim 6, wherein the fabric is woven or knitted from a PET yarn.

8. The composite structure of any preceding claim, further comprising a veil layer comprising veil fibres between the structural layer and the surface layer, wherein the veil layer is configured to reduce print-through of the reinforcing fibres into the surface layer, optionally wherein the veil layer is incorporated into the structural layer.

9. The composite structure of any preceding claim, wherein the surface layer comprises a coloured layer between a clear protective layer and the structural layer.

10. The composite structure of any preceding claim, wherein the layers are fused together to form a composite part.

11. A vehicle part or body panel formed from the composite structure of any preceding claim.

12. A method of manufacturing a part comprising a composite structure, the method comprising:
arranging the composite structure of any of claims 1 to 11 in a mould;
raising the temperature of the composite structure above a reaction threshold temperature to fuse the composite structure;
cooling the composite structure to below the reaction threshold temperature to form the part; and
removing the part from the mould.

13. The method of claim 12, wherein arranging the composite structure in the mould comprises arranging one or more structural layers and one or more surface layers in the mould, wherein each structural layer comprises a woven fabric woven from a yarn of combined reinforcing fibres and thermoplastic polymer fibres and each surface layer comprises a woven or knitted fabric constructed from a thermoplastic polymer yarn.

14. The method of claim 12 or 13, wherein the surface layer is facing the mould.

15. The method of claim 12, 13 or 14, wherein the method further comprises applying a pressure differential across the composite structure while the temperature of the composite structure is above the reaction threshold temperature.
